Europäisches Patentamt

European Patent Office

Office européen des brevets

(11) Veröffentlichungsnummer : **0 045 941**
**B1**

(12) **EUROPÄISCHE PATENTSCHRIFT**

(45) Veröffentlichungstag der Patentschrift :
02.01.86

(21) Anmeldenummer : 81106140.7

(22) Anmeldetag : 05.08.81

(51) Int. Cl.⁴ : **H 04 M 1/26, G 06 F 3/16**

(54) **Wählverfahren zum Verbindungsaufbau in einem Fernsprechvermittlungssystem mit digitaler Sprachübertragung.**

(30) Priorität : 06.08.80 DE 3029823

(43) Veröffentlichungstag der Anmeldung :
17.02.82 Patentblatt 82/07

(45) Bekanntmachung des Hinweises auf die Patenterteilung : 02.01.86 Patentblatt 86/01

(84) Benannte Vertragsstaaten :
FR GB NL

(56) Entgegenhaltungen :
EP-A- 0 027 596
PROCEEDINGS IEEE INTERNATIONAL CONFE-
RENCE ON ACOUSTICS, Speech & Signal Processing, Band 1 of 3, 9.-11. April 1980, Seiten 182-185
New York, U.S.A. L.R. RABINER et al.: "Application of
isolated word recognition to a voice controlled repertory dialer system"
EDN, Band 25, Nr. 19, Oktober 1980, Seiten 57, 59
Boston, U.S.A. E. TEJA: "Repertory telephone dialer
responds to human voice"
ABSTRACT OF NEW TECHNOLOGY FROM THE AIR
FORCE SYSTEMS COMMAND, NTN-78/0334 "System
understands what you say"
IEEE COMPUTER SOCIETY COMPCON 79, 26.
Februar - 1. März, Seiten 19-22 Long Beach, U.S.A.

(73) Patentinhaber : **Siemens Aktiengesellschaft**
**Berlin und München Wittelsbacherplatz 2**
**D-8000 München 2 (DE)**

(72) Erfinder : **Röttger, Klaus, Dipl.-Math.**
**Emil-Riedel-Strasse 11**
**D-8000 München 22 (DE)**

## Beschreibung

Die vorliegende Erfindung bezieht sich auf ein Wählverfahren zum Verbindungsaufbau in einem Fernsprechvermittlungssystem, bei dem der rufende Fernsprechteilnehmer die seinem Verbindungswunsch entsprechende Wählinformation über die betreffende Teilnehmerstation in Form einer Sprachanweisung in das Fernsprechvermittlungssystem eingibt, wobei die Wählinformation an eine für die Digitalisierung derselben vorgesehene Analog/Digital-Umsetzeinrichtung und eine daran angeschlossene Spracherkennungseinrichtung weitergeleitet wird, wobei die Spracherkennungseinrichtung die Wählinformation entschlüsselt, aufbereitet und zur Weiterverarbeitung an einen Wahlaufnahmesatz abgibt, wonach die gewünschte Verbindung aufgebaut wird.

In bisher bekannten Fernsprechvermittlungssystemen mit digitaler Sprachübertragung ist das Wählverfahren zum Aufbau einer Gesprächsverbindung gleich einem der verschiedenen in Fernsprechvermittlungssystemen mit analoger Sprachübertragung verwendeten Wählverfahren, nämlich entweder dem ziffernweisen Aufziehen der Wählinformation an der Fingerlochscheibe eines Nummernschalters oder dem ziffernweisen Betätigen von Ziffertasten einer Tastwahleinrichtung einer Fernsprechstation.

Beide Formen der manuellen Eingabe einer Wählinformation in ein Fernsprechvermittlungssystemen haben jedoch unter bestimmten Bedingungen Nachteile. Beispielsweise kann der rufende Fernsprechteilnehmer die zweite Hand — mit der ersten Hand ist in aller Regel ein eine Sprechkapsel und eine Hörkapsel enthaltender Handapparat zu halten — aus bestimmten Gründen nicht für den Wählvorgang benützen, so daß die Wählinformation nur schwierig in das System einzugeben ist. Zum anderen kann der Wählvorgang wegen des damit verbundenen Ablenkungseffekts für Benutzer eines Autotelefons, die selbst das Fahrzeug zu lenken haben, gefährliche Verkehrssituationen herbeiführen.

In Fernsprechvermittlungssystemen mit digitaler Sprachübertragung sind bekanntlich zum Umsetzen der zunächst in analoger Signalform am Spracheingang des Systems anstehenden Sprachinformation in eine digitale Signalform Analog/Digital-Umsetzeinrichtungen für die Sprachsignale notwendig.

Aus den genannten Nachteilen der manuellen Wählinformationseingabe in ein Fernsprechvermittlungssystem besteht ein Bedarf für ein Wählverfahren, bei dem die Wählinformation auf akustischem Wege, nämlich durch Sprechen von die Wählinformation bildenden Worten, in das Fernsprechvermittlungssystem eingebbar ist.

Aus der Druckschrift « Application of isolated word recognition to a voice controlled repertory dialer system », Proceedings IEEE Intern. Conference on Acoustics, Speech & Signal Proces., Vol. 1 of 3, New York, U.S.A., S.182-185 ist ein System bekannt, das einen Analog/Digital-Umsetzer enthält und bei dem der rufende Teilnehmer die seinem Verbindungswunsch entsprechende Wählinformation über die betreffende Teilnehmerstation in Form einer Sprachanweisung in das Fernsprechsystem eingibt, die Wählinformation jeweils an die Spracherkennungseinrichtung weitergeleitet wird, die Sprachanweisung mit einer der Teilnehmerstation zugeordneten Vergleichs-Sprachanweisung verglichen wird und bei Erkennen einer der abgelegten Vergleichssprachanweisung entsprechende Wählinformation entschlüsselt, aufbereitet und zu einem Wahlaufnahmesatz weitergeleitet wird, wonach die gewünschte Verbindung aufgebaut wird.

Dieses bekannte System verlangt, daß die Spracherkennungseinrichtung durch die Benutzer « trainiert » werden muß und daß eine gesprochene Information mit in dem System abgelegten Sprachmustern, die den Benutzern jeweils individuell nach dem « Training » zugeordnet worden sind, verglichen werden muß. Dies führt zu komplizierten und zeitintensiven Such- und Vergleichsvorgängen, so daß die Reaktionszeit des Systems verhältnismäßig groß ist.

Der vorliegenden Erfindung liegt die Aufgabe zugrunde, ein Wählverfahren zum Verbindungsaufbau in einem Fernsprechvermittlungssystem mit digitaler Sprachübertragung zu schaffen, für das die ohnehin zwangsläufig vorzusehenden Mittel zum Umsetzen analoger in digitale Sprachsignale mit ausgenutzt werden können, um den verschiedenen Steuer- bzw. Recheneinrichtungen eines solchen Vermittlungssystems die jeweilige Wählinformation in digitaler Signalform anbieten zu können, wobei eine Möglichkeit gegeben sein soll, gleichzeitig mit der Sprachanweisung Sprach- bzw. Stimmerkmale des betreffenden Benutzers in das System einzugeben.

Die der Erfindung zugrundeliegende Aufgabe wird durch ein Wählverfahren der eingangs genannten Art und gemäß dem Oberbegriff des Patentanspruchs 1 zum Verbindungsaufbau in einem Fernsprechvermittlungssystem gelöst, das dadurch gekennzeichnet ist, daß das Fernsprechvermittlungssystem selbst ein System mit digitaler Sprachübertragung ist und daß zur Erleichterung der Erkennung der Sprachanweisung ein persönlicher Ausweis des rufenden Teilnehmers mit auf diesem beispielsweise nach einem magnetischen Aufzeichnungsverfahren angebrachten Sprachproben oder Stimmerkmalen des rufenden Teilnehmers in eine bei der Teilnehmerstation angeordnet Ausweis-Abtasteinrichtung eingeführt wird und daß die Ausweis-Abtasteinrichtung die Sprachproben oder Stimmerkmale abtastet und zu der Spracherkennungseinrichtung überträgt, wonach mittels der Sprachproben oder der Stimmerkmale die Sprachanweisung für die Spracherkennungseinrichtung erkennbar wird.

Durch die Erfindung wird dem rufenden Teilnehmer ein von einem manuell durchzuführenden Wählvorgang befreiendes Wählverfahren zur Verfügung gestellt, wozu vorteilhafterweise auch die Mittel zum Umsetzen der ohnehin vorhandenen Mittel zum Umsetzen analoger Sprachsignale in digitale Signale mit benutzt werden können. Dadurch, daß zusammen mit der Sprachanweisung Sprach- bzw. Stimmerkmale des betreffenden Benutzers mit in das System eingegeben werden, können die Reaktionszeiten des Systems herabgesetzt werden.

Vorteilhafte Weiterbildungen der Erfindung sind durch die in den Unteransprüchen angegebenen Merkmale gekennzeichnet.

Im folgenden wird die Erfindung anhand einer ein Ausführungsbeispiel für die Erfindung betreffenden Figur im einzelnen erläutert.

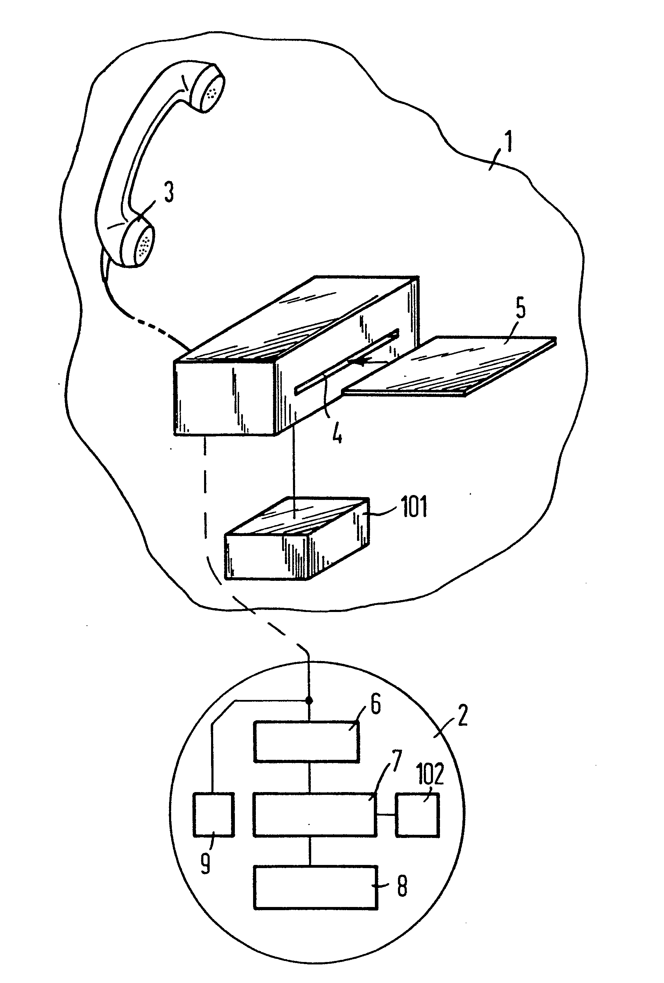

Die Figur zeigt ein Blockschaltbild für ein Fernsprechvermittlungssystem mit digitaler Sprachübertragung, auf das das erfindungsgemäße Wählverfahren dadurch angewendet werden kann, daß zusätzlich zu der Umsetzeinrichtung zum Umsetzen analoger in digitale Sprachsignale weitere Mittel zur Spracherkennung sowie weitere Mittel vorgesehen sind.

Zum Verbindungsaufbau gibt der rufende Fernsprechteilnehmer eine dem Verbindungswunsch entsprechende Wählinformation über die Sprechkapsel 3 seiner Teilnehmerstation 1 in Form einer Sprachanweisung in das Fernsprechvermittlungssystem 2 ein. Diese Wählinformation wird an eine jeweils für die Digitalisierung der später zu übertragenden Sprachsignale in dem Fernsprechvermittlungssystem 2 zwangsläufig vorhandene Analog/Digital-Umsetzeinrichtung 6 weitergeleitet. Wie die Figur zeigt, kann eine solche Analog/Digital-Umsetzeinrichtung 6 systemintern, nämlich örtlich den Amtseinrichtungen zugeordnet, oder systemextern, nämlich der Teilnehmerstation 1 zugeordnet, vorgesehen sein. Die Spracherkennungseinrichtung 7 ist vorzugsweise als mikroprozessorgesteuerte Sprachverarbeitungseinrichtung realisiert. Diese Spracherkennungseinrichtung 7 bzw. Sprachverarbeitungseinrichtung entschlüsselt die gesprochene Wählinformation, bereitet sie auf und leitet sie zur Weiterverarbeitung an einen Wahlaufnahmesatz 8 weiter. Danach kann in bekannter Art und Weise die gewünschte Verbindung aufgebaut werden.

Dabei kann es vorteilhaft sein, daß der rufende Teilnehmer die Sprachanweisung in Form von gesprochenen genormten, nicht auf einer Ziffernfolge basierenden Abkürzungen, vorzugsweise Abkürzungen von Ortsnamen über die Sprechkapsel 3 in das System eingibt.

Gemäß der Erfindung ist nun vorgesehen, daß zur Erleichterung der Erkennung dieser Sprachanweisung ein persönlicher Ausweis 5 des rufenden Teilnehmers mit auf diesem vorzugsweise nach einem an sich bekannten magnetischen Aufzeichnungsverfahren angebrachten Sprachproben oder Stimmmerkmalen des rufenden Teilnehmers in eine bei der Teilnehmerstation 1 angeordnet Ausweis-Abtasteinrichtung 4 eingeführt wird. Diese Ausweis-Abtasteinrichtung 4 tastet die Sprachproben oder Stimmerkmale ab und überträgt diese zu der Spracherkennungseinrichtung 7, wonach mittels der Sprachproben oder der Stimmerkmale die akustisch gestörte Sprachanweisung für die Spracherkennungseinrichtung 7 erkennbar wird. Die Sprachproben bestehen vorteilhafterweise aus den gesprochenen Ziffern von null bis neun und Korrekturworten, die an fest vorgegebenen Stellen auf dem persönlichen Ausweis 5 gespeichert sind. Die Ziffern null bis neun und die Korrekturworte sind vorteilhafterweise derart in einer bestimmten geometrischen Anordnung positioniert, daß die verwendete Sprache, einschließlich Dialekte der Sprache, leichter erkannt werden kann, d. h. die Anzahl der durchzuführenden Vergleichsoperationen kann auf ein Minimum reduziert werden.

Die Verwendung von Ortsnamen innerhalb der Sprachanweisung kann den Wählvorgang durch die damit verbundene Reduktion der Ziffernfolge einfacher und komfortabler für den Fernsprechteilnehmer gestalten. Die kritische Phase des Wählvorganges während des Lenkens eines Fahrzeuges bei Anrufen über das Autotelefon kann durch die Erfindung vorteilhafterweise entfallen. Außerdem wird dem Fernsprechteilnehmer, der eine Sprechverbindung von einem Ort aus aufbauen will, der akustisch gestört ist, automatisch angezeigt, daß das beabsichtigte Gespräch dann aus akustischen Gründen undurchführbar ist, wenn die Spracherkennungseinrichtung 7 trotz Zuhilfenahme der Sprachproben die Sprachanweisung für den Wählvorgang nicht entschlüsseln konnte. Wenn es sich bei dem Fernsprechteilnehmer um den Lenker eines Fahrzeuges handelt, hat er gegebenfalls die Möglichkeit, die akustische Störung seiner unmittelbaren Umgebung, beispielsweise durch Verminderung der Motordrehzahl (Einlegen des Schonganges) oder Schließen des Seitenfensters, zu verringern und danach den Wählvorgang zu wiederholen.

## Patentansprüche

1. Wählverfahren zum Verbindungsaufbau in einem Fernsprechvermittlungssystem, bei dem der rufende Fernsprechteilnehmer die seinem Verbindungswunsch entsprechende Wählinformation über die betreffende Teilnehmerstation (1) in Form einer Sprachanweisung in das Fernsprechvermittlungssystem (2) eingibt, wobei die Wählinformation an eine für die Digitalisierung derselben vorgesehene Analog/Digital-Umsetzeinrichtung (6) und eine daran angeschlossene Spracherkennungseinrichtung (7) weitergeleitet wird, wobei die Spracherkennungseinrichtung (7) die Wählinformation entschlüsselt, aufbereitet und zur Weiterverarbeitung an einen Wahlaufnahmesatz (8) abgibt, wonach die gewünschte Verbindung aufgebaut wird, dadurch gekennzeichnet

daß das Fernsprechvermittlungsstem selbst ein System mit digitaler Sprachübertragung ist,

daß zur Erleichterung der Erkennung der Sprachanweisung ein persönlicher Ausweis (5) des rufenden Teilnehmers mit auf diesem beispielsweise nach einem magnetischen Aufzeichnungsverfahren angebrachten Sprachproben oder Stimmerkmalen des rufenden Teilnehmers in eine bei der Teilnehmerstation (1) angeordnete Ausweis-Abtasteinrichtung (4) eingeführt wird und

daß die Ausweis-Abtasteinrichtung (4) die Sprachproben oder Stimmerkmale abtastet und zu der Spracherkennungseinrichtung (7) überträgt, wonach mittels der Sprachproben oder der Stimmerkmale die Sprachanweisung für die Spracherkennungseinrichtung (7) erkennbar wird.

2. Wählverfahren nach Anspruch 1, dadurch gekennzeichnet, daß der rufende Teilnehmer die Sprachanweisung in Form von gesprochenen genormten, nicht auf einer Ziffernfolge basierenden Abkürzungen, vorzugsweise Abkürzungen von Ortsnamen, über die Sprechkapsel (3) der Teilnehmerstation (1) in das Fernsprechvermittlungssystem (2) eingibt.

3. Wählverfahren nach Anspruch 1, dadurch gekennzeichnet, daß die Sprachproben aus den gesprochenen Ziffern von null bis neun und Korrekturworten bestehen, die an fest vorgegebenen Stellen auf dem persönlichen Ausweis (5) gespeichert sind.

4. Wählverfahren nach Anspruch 3, dadurch gekennzeichnet, daß die Ziffern von null bis neun und die Korrekturworte derart in einer bestimmten geometrischen Anordnung positioniert sind, daß die verwendete Sprache einschließlich Dialekte der Sprache leichter erkannt werden kann, d. h. die Anzahl der durchzuführenden Vergleichsoperationen auf ein Minimum reduziert werden kann.

## Claims

1. A dialling method for establishing a connection in a telephone exchange system, wherein the calling subscriber keys the dialling information, which corresponds to his connection request, into the telephone exchange system in the form of a speech statement by means of the respective subscriber station (1),

wherein the dialling information is transmitted to an analogue/digital conversion device (6), which is provided for the digitalisation thereof, and to a speech recognition device (7) connected thereto,

wherein the speech recognition device (7) deciphers the dialling information, edits it and transmits it to a dial receiving set (8) for further processing, whereupon the required connection is established,

characterised in

that the telephone exchange system itself is a system with digital speech transmission,

that in order to facilitate the recognition of the speech statement a personal identification (5) of the calling subscriber with speech samples or voice characteristics of the calling subscriber, which are applied to said identification for example in accordance with a magnetic recording process, is inserted into an identification scanning device (4) which is arranged in the subscriber station (1), and

that the identification scanning device (4) scans the speech samples or voice characteristics and transmits them to the speech recognition device (7), whereupon the speech statement is recognisable for the speech recognition device (7) by means of the speech samples or the voice characteristics.

2. A dialling method as claimed in claim 1, characterised in that the calling subscriber keys the speech statement into the telephone exchange system in the form of spoken standardized abbreviations, which are not based on a sequence of digits, preferably abbreviations of place-names, by means of the transmitter unit (3) of the subscriber station (1).

3. A dialling method as claimed in claim 1, characterised in that the speech samples comprise the spoken digits from zero to nine and correction words, which are stored at fixed locations on the personal identification (5).

4. A dialling method as claimed in claim 3, characterised in that the digits from zero to nine and the correction words are positioned in a specific geometric arrangement in such a manner that the language used including dialects of the language can be more easily recognised, i. e. the number of the comparison operations, which are to be carried out, can be reduced to a minimum.

**Revendications**

1. Procédé de sélection pour l'établissement d'une liaison dans un système de commutation téléphonique, selon lequel l'abonné appelant introduit l'information de sélection correspondant à la communication qu'il désire par l'intermédiaire du poste d'abonné (1) concerné dans le système de commutation téléphonique (2) sous la forme d'une instruction verbale,

où l'information de sélection est transmise à un dispositif convertisseur analogique/numérique (6) prévu pour sa numérisation et à un dispositif de reconnaissance de la parole (7) qui y est raccordé,

où le dispositif de reconnaissance de la parole (7) décode l'information de sélection, la prépare et la délivre pour traitement ultérieur à un récepteur de sélection (8), après quoi la liaison désirée est établie,

caractérisé en ce

que le système de commutation téléphonique est lui-même un système à transmission numérique de la parole,

que, pour faciliter la reconnaissance de l'instruction verbale, une pièce d'identité personnelle (5) de l'abonné appelant, pourvue d'échantillons de paroles ou de caractéristiques de voix de l'abonné appelant, selon un procédé d'enregistrement magnétique par exemple, est introduite dans un dispositif de lecture de pièce d'identité (4) installé auprès du poste d'abonné (1) et

que le dispositif de lecture (4) lit les échantillons de paroles ou caractéristiques de voix et les transmet au dispositif de reconnaissance de la parole (7), ce qui permet à celui-ci de reconnaître l'instruction verbale.

2. Procédé selon la revendication 1, caractérisé en ce que l'abonné appelant introduit l'instruction verbale dans le système de commutation téléphonique, par le micro (3) du poste d'abonné (1), sous forme d'abréviations normalisées, prononcées, non basées sur une succession de chiffres, de préférence d'abréviations de noms de localités.

3. Procédé selon la revendication 1, caractérisé en ce que les échantillons de paroles sont constitués de la prononciation des chiffres zéro à neuf et de mots de correction qui sont mémorisés à des endroits préfixés sur la pièce d'identité personnelle (5).

4. Procédé selon la revendication 3, caractérisé en ce que les chiffres zéro à neuf et les mots de correction sont positionnés de telle manière dans une disposition géométrique déterminée que la langue, y compris des dialectes de la langue, puissent être reconnus plus facilement, de manière que le nombre des opérations de comparaison à effectuer puisse être réduit à un minimum.